Europäisches Patentamt

European Patent Office

Office européen des brevets

(19)

(11) Publication number: **0 265 695 B1**

## EUROPEAN PATENT SPECIFICATION

(12)

(45) Date of publication of patent specification: **17.06.92**  (51) Int. Cl.⁵: **G11B 7/09**

(21) Application number: **87114288.1**

(22) Date of filing: **30.09.87**

(54) Recording apparatus.

(30) Priority: **30.09.86 JP 232741/86**

(43) Date of publication of application:
**04.05.88 Bulletin 88/18**

(45) Publication of the grant of the patent:
**17.06.92 Bulletin 92/25**

(84) Designated Contracting States:
**DE FR GB NL**

(56) References cited:
**EP-A- 0 166 199**
**FR-A- 2 248 568**
**US-A- 3 963 862**
**US-A- 4 067 044**

**PATENT ABSTRACTS OF JAPAN, vo. 9, no. 199 (P-380)(1922), 16 August 1985.**

**PATENT ABSTRACTS OF JAPAN, vol. 7, no. 234 (P-230)(1379), 18 October 1983.**

(73) Proprietor: **SONY CORPORATION**
**7-35 Kitashinagawa 6-Chome Shinagawa-ku Tokyo 141(JP)**

(72) Inventor: **Lagadec, Roger**
**c/o Sony Corporation 7-35 Kitashinagawa 6-chome**
**Shinagawa-ku Tokyo(JP)**

(74) Representative: **TER MEER - MÜLLER - STEIN-MEISTER & PARTNER**
**Mauerkircherstrasse 45**
**W-8000 München 80(DE)**

Rank Xerox (UK) Business Services

EP 0 265 695 B1

## Description

## FIELD OF THE INVENTION

The invention relates to a recording apparatus for recording a substantially spiral track in the form of a guide groove on a disk-shape recording medium comprising a laser beam source;
- optical means for guiding a laser beam from said laser beam source to said disk-shape recording medium, said optical means including deflection means for deflecting the laser beam in a radial direction of said disk-shape recording medium:
- control signal generating means for generating a control signal supplied to said deflection means, said control signal being a composite signal having a first signal with a predetermined frequency and a second signal with a frequency lower than said predetermined frequency and superimposed on said first signal.

## DESCRIPTION OF THE PRIOR ART

A recording principle similar to the one underlying the apparatus in the foregoing paragraph is described in US-A-3 963 862. This document describes the recording of a color television signal on an optical disk in the form of a track of constant width. The radial track center position of a laser beam is modulated by two frequencies, i.e. by a higher frequency of the carrier wave of the luminance information and by the lower frequency of another carrier wave modulated with the chrominance and sound information. The specification of this document also mentions the possibility to control the centering of the reading spot by extracting the low frequency component from the electrical signals supplied by a detector array.

Specifically, as a tracking error detection system for optical disk reproduction, a three-spot system, a push-pull system, a wobbling system, etc. have been proposed. The three-spot system maintains a relationship in which two subbeam spots are positioned on both sides of a track and a main beam spot is positioned at the center of the track. Reflection light from the two subbeams is led to a pair of optical sensors arranged on both sides of a main sensor so that a tracking error can be detected from a difference output of the pair of optical sensors. In the push-pull system, a beam is irradiated at the center of the track, reflection light therefrom is detected at a two-division optical sensor, and a difference output of two opticalsensor elements due to deviation of diffracted light is detected as a tracking error. With the wobbling system on the other hand, a tracking error is derived from an output of a coherent detection of a reproduced signal and a signal oscillating the reproduced beam by impressing a meander on the reproduced beam including a system for wobbling the track side at a predetermined frequency. The wobbling is done by a sinewave signal of 22.05 kHz, for instance.

From EP-A1-0 166 199, for achieving servo tracking it is also known to use a servo groove having a constant depth and variable width which allows a recording (or reading) laser beam to be modulated in intensity to derive a tracking control signal and a position indicating signal. The modulating is done in accordance with fixed address signals supplied from a specific address signal source. As the read beam scans the servo groove it is maintained along its center in response to the servo control signal and is modulated in intensity with the width variation.

Further, for the rotation system of an optical disk a constant angular velocity system (CAV-system) and a constant linear velocity system (CLV-system) are known. With the CLV-system, the density of data recording as compared with CAV-system is improved but the CLV-system, for servo control of the rotation speed, needs information on for example the beam position in radial direction of the optical disk. The position in radial direction of the disk is detected by a position detector including a potentiometer operating with an optical head.

However, for detecting the position of the optical head by use of such a position detector with a potentiometer increases the cost and does not necessarily attain correct position detection. It is desirable that the position of the optical head on the optical disk can be detected from the reproduced signal without separately providing such position detector.

As one method for this approach it would be conceivable to record a timecode. However, the recording of a time code in a data track itself decreases the effective data amount that could be recorded on a single disk. But in the case where the recording is made by modulation of the time code, the use of a PSK-modulation has to be considered. The PSK-modulation develops a modulated signal shown in Fig. 12B having phases corresponding to "1" and "0" of the data shown in Fig. 12A, respectively. The disadvantage is that the phases of the modulated signal become discontinuous.

## SUMMARY OF THE INVENTION

It is an object of the invention to provide a recording apparatus that does provide unambiguous position information by applying a signal containing another position information signal such as a time code as a deflection control signal for forming a wobbling track for a tracking error detection without employing any position detector but also without increasing data redundancy.

According to the invention, a recording apparatus for recording a substantially spiral track in the form of a guide groove on a disk-shape recording medium as described in the first paragraph of this specification is characterized in that means for driving the disk-shape recording medium with a substantially constant linear velocity (CLV) are provided and in that said second signal forming the control signal together with said first signal of a predetermined higher frequency is an absolute time code signal having minutes information, seconds information and frames information in the form of a binary coded decimal number.

The track is preferably pregrooved and the first signal of predetermined frequency is a wobbling signal whereas the second signal is the absolute time information.

Such a combination signal which is the superimposition of said first signal and said second signal, is used as said deflection control signal. The first signal serves for the detection of tracking errors. For example, this first signal has a frequency of 22.05 kHz. The second signal is an absolute time code of a CD format varying at a lower frequency, for instance at 75 Hz instead of 22.05 kHz. Since the frequency of said second signal is very low as compared with said first signal, the deflection control signal is determined by said predetermined frequency of said first signal as a whole, even though the second signal is superimposed. As a result, when the disk-shaped recording medium is reproduced, a signal of said predetermined frequency component can be separated and the second signal can be taken out from the signal of said predetermined frequency component. In this way, since the deflection control signal has information on the absolute timecode, the position detection of a head on the disc-shaped recording medium is possible within the above-mentioned CLV-system, however, without the need for a specific position detector including a potentiometer.

**BRIEF DESCRIPTION OF THE DRAWINGS**

The invention will become more apparent from the following detailed description when taken in conjunction with the drawings in which:

Fig. 1 is a block diagram of a modulation circuit for modulating an absolute time code into a pulse sequence;

Fig. 2 is a block diagram of a counter for generating the absolute time code;

Fig. 3 is a time chart for describing the operation of the modulation circuit;

Figs. 4 and 5 are waveform diagrams for describing a modulation rule and a modulation method;

Fig. 6 is a schematic diagram for showing a structure of a cutting system;

Fig. 7 and 8 are schematic diagrams for showing an example of a manufacturing method of an optical disk and for showing a pregroove;

Fig. 9 is a block diagram of one example of a wobbling signal generator;

Fig. 10 is a diagram of a frequency spectrum for describing the band restriction in the wobbling signal generator;

Fig. 11 is a block diagram of an example of a recording/reproducing circuit of an optical disk; and

Fig. 12 is a waveform diagram for explaining conventional PSK modulation;

DESCRIPTION OF THE PREFERRED EMBODIMENT

An embodiment of the invention will be described hereunder. This description will be given in the order mentioned below.

    a. Time code and modulation rule
    b. Modulation circuit
    c. Formulation of pregroove
    d. Wobbling signal generator
    e. Disk recording/reproducing circuit
    f. Modification

a. Time code and modulation rule

In this embodiment, when a spiral pregroove is provided in an optical disk by wobbling to carry out a tracking operation, a time code is recorded in the pregroove itself. For the time information, an absolute time code adopted in a CD (compact disk) is employed. The absolute time code is in one-to-one correspondence to a scanning position of a head (pickup) of the optical disk and gives not only information of a disk diameter at the time of rotating the optical disk by a CLV (constant linear velocity) system but also address information at the time of data access.

In a CD, a signal of 588 bits is recorded as a frame in channel bits, and the frame frequency at a pre-determined linear velocity is 7.35 kHz. In a CD, spaces (user's bits or subcodes) are provided for recording information other than a music signal. The subcode is made up of eight independent bits (called "PQRSTUVW"), and two channels of P and Q are presently employed. Said eight independent bits are inserted into one frame by EFM modulation. Each channel of the subcode is composed of blocks each comprising 98 bits contained in 98 frames.

In the music signal and data of the channel Q of a read-out track, an absolute time code "AMIN", "ASEC", and "AFRAME" is inserted. The absolute time code is brought to $\lceil$ 00 minute 00 second 00 frame $\rfloor$ to vary depending on the running time of the disk, and it is assumed that the condition "one second = 75 frames" is established in a CD based on the above-mentioned frame frequency.

Each minute, second and frame of the absolute time code can be represented by two digits of a BCD code. In other words, the minute and second vary between (00~ 59), and the frame changes between (0 ~ 74) using a total of six characters of the BCD code.

EFM (Eight to Fourteen Modulation) for channel coding) converts a signal of 8 bits per symbol into a 14-bit signal according to a predetermined rule. With the EFM, the occupied frequency band becomes narrow, and clock components are increased to reduce direct current components.

On the other hand, in a tracking system for wobbling a pregroove, a 22.05 kHz sinewave is employed. For this reason, in the case of recording the absolute time code of the CD format as a wobbled pregroove, it is necessary to reproduce the sinewave signal of the above-mentioned frequency with stable phase. In this one embodiment, the modulation of the absolute time code is made on the basis of a sampling frequency of (22.05 x 2 = 44.1 kHz).

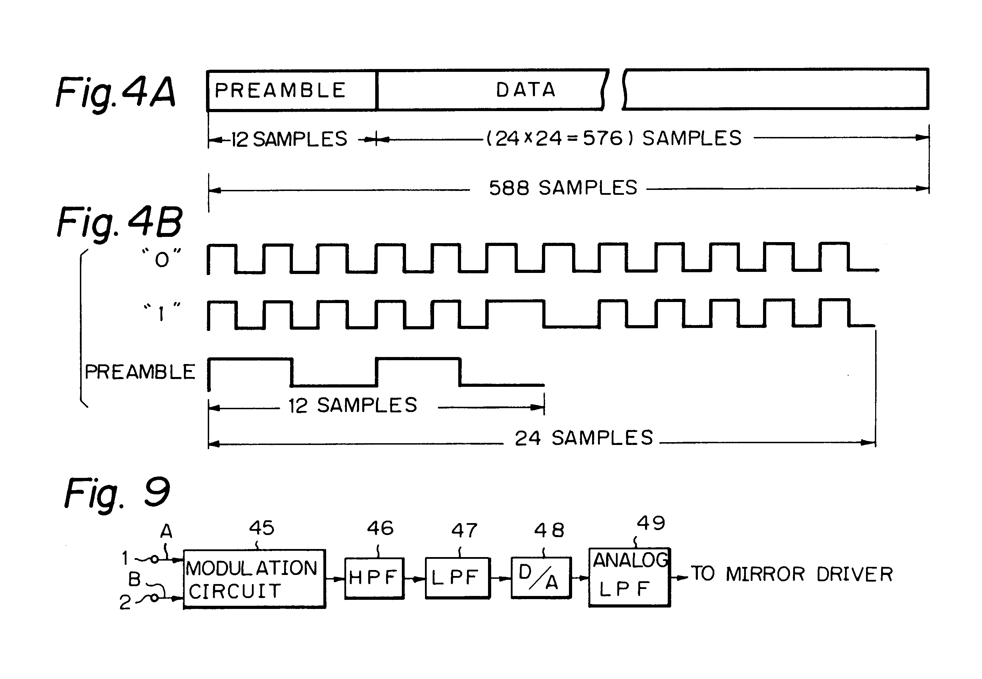

Since the frequency of change in the absolute time code is 75 Hz, 588 samples are contained in one period in the case of a 44.1 kHz sampling frequency. A pre-determined number of samples, for example, 24 samples (2 x 12) modulation bits) are allotted for one bit of absolute time code data of six BCD characters ( a total of 24 bits), each of which has four bits. As shown at A of Fig. 4, a preamble having a 12-sample length is added at the head of the 588 samples ( = 1/75 second) and data of (24 x 24 = 576) samples are following thereafter.

"0" and "1" of one data bit and the preamble are modulated, respectively as shown in Fig. 4B. The data bits "0" are modulated into a sequence ("0" sequence) in which 24 samples take a high level and a low level alternately. For the data bits "1", the 12-th sample of the 24 samples has a high level changed from a low level, the 13-th sample has a low level changed from a high level, and the other samples are modulated into a sequence ("1" sequence) similar to the data bits "0". Also, the preamble is transferred into a pattern having a high level and a low level alternately every three samples. The data bits "0" are modulated into a DC-free sequence. This sequence has a repetition frequency of 21.05 [kHz] and contains a sinewave component for tracking control. The "1" sequence corresponding to the data bits "1" is similar to a DC-free sequence similarly and its run length is limited to two samples. The "0" sequence corresponding to the data bits "0" is desirable as compared with the "1" sequence in terms of the sinewave component for tracking control. With respect to the absolute time code, the "0" sequence is a more desirable pattern that the "1" sequence, since the length of the "0" continuation is long as compared with that of "1". The sequence corresponding to the preamble is DC-free and is generated once every 1/75 second.

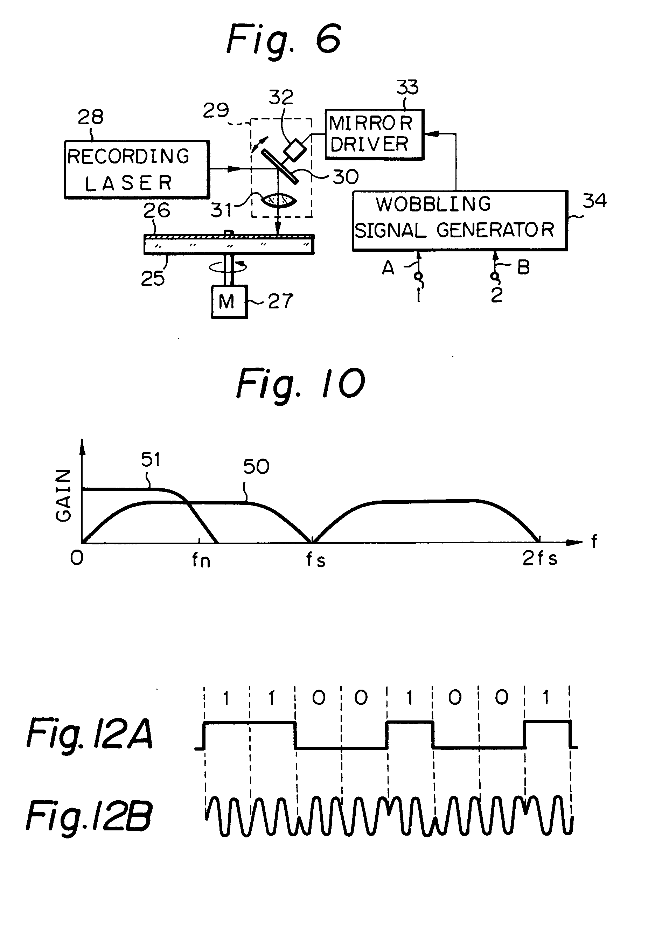

A method for actually producing the "1" sequence and the preamble sequence will be described with reference to Fig. 5. 24 samples of the "1" sequence are developed by the addition of a ternary signal, which is ( + 1) at the 12-th sample and (-1) at the 13-th sample, to the "0" sequence as shown in Fig. 5A. A 12-samples sequence corresponding to the preamble is developed by the addition of a signal, which is ( + 1) at the 8th sample and the 14-th sample, respectively and (-1) at the 11-th sample and the 17-th sample, respectively, to the "0" sequence as shown in Fig. 5B.

b. Modulation circuit

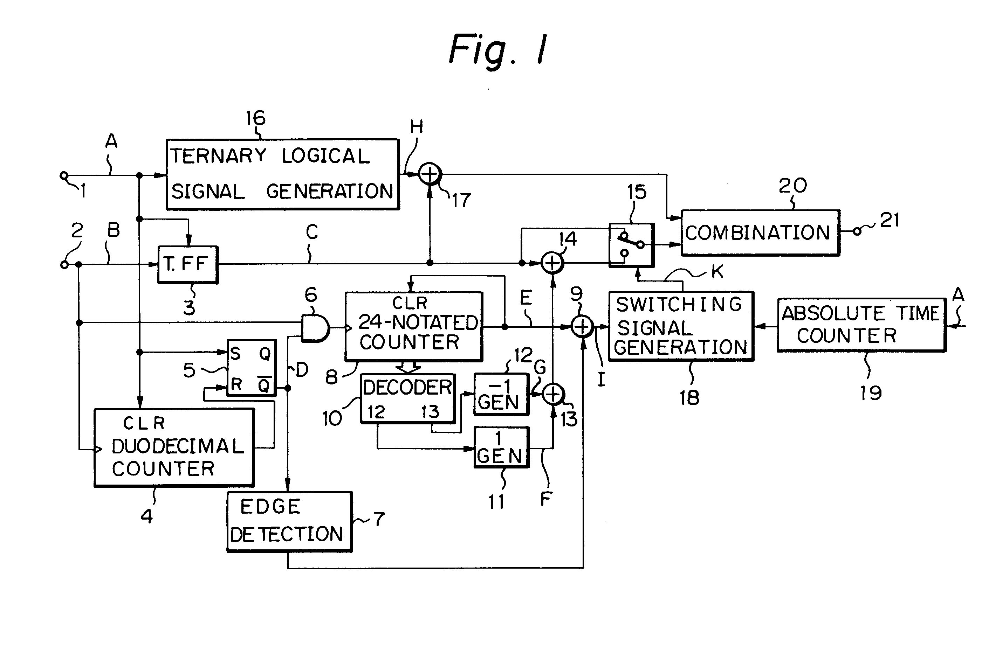

As described above, one example of the modulation circuit, which modulates "0" or "1" of data bits into a 24-sample sequence of a predetermined pattern, is shown in Fig. 1.

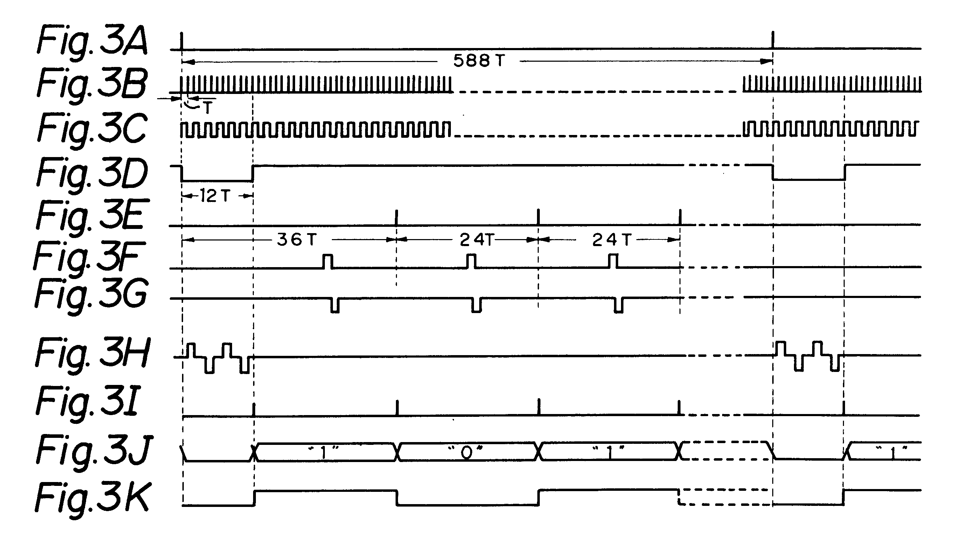

In Fig. 1, 1 is an input terminal to which a frame pulse A of a frame frequency of 75 Hz is supplied. 2 is an input terminal to which a clock pulse B of 44.1 kHz is given. The period of the clock pulse B is indicated by T. A and B of Fig. 3 show the frame pulse A and the clock pulse B, respectively. The clock pulse B is used as input for a T flip-flop 3 and a for duodecimal counter 4. A "0" sequence C with the period 2T shown in Fig. 3C is generated from the T flip-flop 3. To the T flip-flop 3 and the duodecimal counter 4 is supplied the frame pulse A as a clear input.

The frame pulse A is supplied as a set input of the SR flip-flop 5, and as its reset input the carry output of the duodecimal counter 4 is given. For this reason, a pulse signal D, which takes a low level for a period from the frame pulse A to 12T, is produced at an output terminal $\overline{Q}$ of the SR flip-flop 5 as shown in Fig. 3D. The pulse signal D is supplied to an AND gate 6 and an edge detector 7. The clock pulse B is given to the AND gate 6 and to the 24-notated counter 8 via the AND gate 6. The 24-notated counter 8 is cleared by a carry output E of the 24-notated counter 8, and the carry output E is given to an adder 9.

The carry output E of the 24-notated counter 8 is generated every 24T after the pulse signal D takes a high level as shown in Fig. 3F. Also, a pulse signal, which is in synchronism with a leading edge of the pulse signal D, is produced from the edge detector 7 and supplied to the adder 9. A pulse signal I from the adder 9 is generated every 24T after the 12T-period of the preamble as shown in Fig. 3I.

The parallel output data of the 24-notated counter 8 is supplied to a decorder 10. The output signal of the decoder 10 produced when the content of the 24-notated counter 8 is 12, is given to a (1) generator 11, while the output signal of the decoder 10 produced when the content of the 24-notated counter 8 is 13, is given to a (-1) generator 12. As a result, as shown in Fig. 3F, a pulse signal F with a "1" level is generated from the (1) generator 11, wherease a pulse signal G with a (-1) level is generated from the (-1) generator 12 as shown in Fig. 3G. These pulse signals F and G are added up by an adder 13. The output signal of the adder 13 is given to an adder 14. Since the "0" sequence C from the T flip-flop 3 is supplied to the adder 14, the output signal of the adder 14 becomes a "1" sequence.

These "0" sequence and "1" sequence are supplied to two input terminals of a switch circuit 15, respectively. The switch circuit 15 is controlled by a switch signal K from a switch signal generator 18, and data from the switch circuit 15 is supplied to a combination circuit 20. The combination circuit 20 adds a preamble of 12 samples every 588 samples. The preamble is developed by a ternary logical signal generator 16 and an adder 17. The ternary logical signal generator 16 generates a ternary pulse signal H of (0100 - 100100 - 10) in synchronism with the frame pulse A as shown in Fig. 3H. The pulse signal H and the "0" sequence C are given to the adder 17, and the preamble is produced via the adder 17. A modulated sequence is obtained at an output terminal 21 of the combination circuit 20.

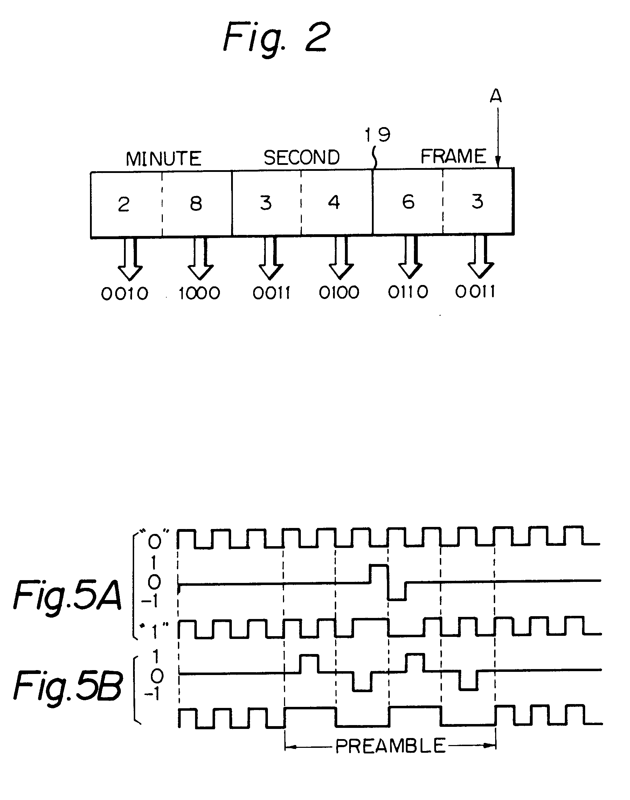

19 is an absolute time counter for producing an absolute time code of a CD format on the basis of the frame pulse A. Fig. 2 shows a construction of the absolute time counter 19, and each of the frame, second and minute is made up of two BCD. Fig. 2 illustrates the example of ⌈28 minutes 34 seconds 63 frames⌋. In this case, six BCD characters ⌈(0010) (1000) (0011) (0100) (0110) (0011)-⌋ are generated. The absolute time code from the absolute time counter 19 is sent to the switching signal generator 18. Each data bit of the absolute time code is taken into the switching signal generator 18 in synchronism with a pulse signal I as shown in Fig. 3J. A switching signal K (Fig. 3K), which takes a high level in response to a data bit "1" and a low level in response to a data bit "0", is developed. By the low level of the switching signal K, the "0" sequence is selected by the switch circuit 15, while the "1" sequence is selected by the switch circuit 15 with the high level of the switching signal K.

c. Formation of pregroove

A cutting system for forming a pregroove on an optical disk is shown in Fig. 6. In Fig. 6, 25 shows a glass disk, and a photoresist 26 is coated on the glass disk 25. The glass disk 25 is rotated by a spindle motor 27 at CLV. 28 is a recording laser, for instance, an argon-ion laser. A laser beam from the recording laser 28 is reflected from a glavanomirror 30 of an optical head 29 circled by a broken line and irradiated into the photoresist 26 through an object lens 31. The rotation of the galvanomirror 30 by a galvanomotor 32 wobbles the laser beam in the diameter direction.

A drive signal from a mirror driver 33 is given to the galvanomotor 32. To the mirror driver is supplied a wobbling signal from a wobbling signal generator 34. The wobbling generator 34 is composed of the above-mentioned modulation circuit and a filter for band restriction. A spiral and wobbled pregroove is exposed onto the photoresist 26 by the laser beam.

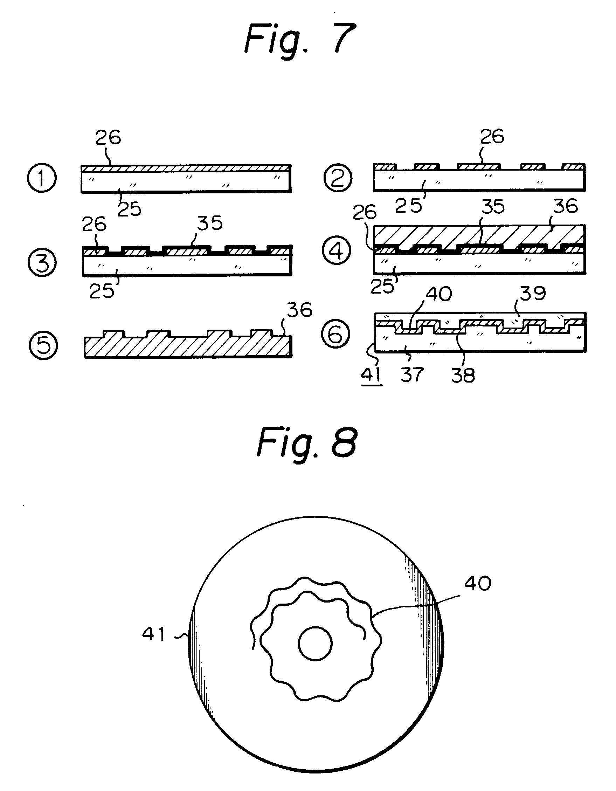

In Fig. 7, ① shows a glass master optically cut, and a concave portion corresponding to the pregroove is formed onto the photoresist 26 through development as shown by ②. An aluminium layer 35 is then vapor-deposited on the photoresist 26 ( ③ ). Further, nickel plating 36 is applied ( ④ ), and a metal master is formed by removing the nickel plating 36 ( ⑤ ). A stamper is made by the metal master. An optical disk 41 is made through steps of injection molding by the stamper, the formation of a recording layer and the addition of a protective film ( ⑥ ). The optical disk 41 has a polycarbonate substrate 37, a recording layer 38, and a transparent protective film 39, and a pregroove 40 is formed on the recording layer 38. The optical disk 41 may have a pasted structure to enable the recording on both surfaces.

The recording layer 38 is composed of a material of SbSe, BiTe, etc. in the case of a WORM optical disk, while in the case of an erasable optical disk, for instance, in the case of an optical magnetic disk, it is made up of a material such as TbFeCo. Also, the present invention can be applied to a phase change type-optical disk utilizing a crystal-amorphism phase change. The pregroove 40 is made to a U groove or a V groove, and pits are formed on the pregroove 40 or in a region between the pregrooves. Fig. 8 shows a part of the pregroove 40 formed on the optical disk 41. The diameter of the optical disk 41 is the same as that of a CD.

d. Wobbling signal generator

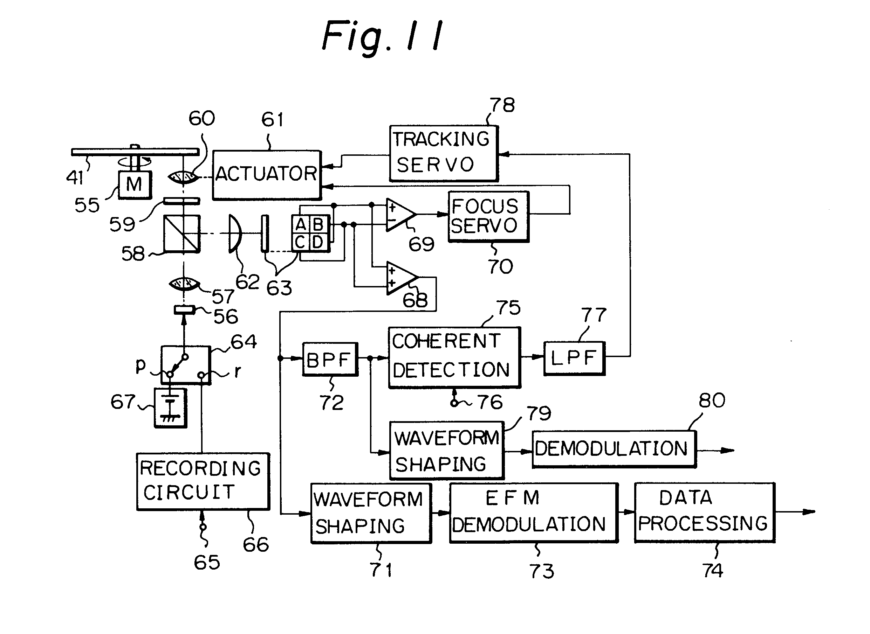

Fig. 9 shows the wobbling signal generator, and 45 is the above-mentioned modulation circuit shown in Fig. 1. A pulse sequence modulated with a absolute time code of the CD format is generated from the modulation circuit 45. The pulse sequence basically has a repetition frequency of 22.05 kHz and is subjected to band restriction through the passage of a filter. The band restriction toward the low pass is necessary for suppressing the disturbance against a tracking error signal, while the band restriction toward the high pass is needed to suppress the disturbance against an EFM modulation signal (reproduced data).

A digital high-pass filter 46 connected to the modulation circuit 45 is provided for carrying out the band restriction with respect to the low pass and has a frequency characteristic shown at 50 in Fig. 10. In Fig. 10, $f_n$ denotes 22.05 kHz, and $f_s$ depicts 44.1 kHz, respectively.

The output signal of the digital high-pass filter 46 is supplied to a digital low-pass filter 47. The digital low-pass filter 47 has a frequency characteristic shown at 51 in Fig. 10. For the digital low-pass filter 47, a structure using over-sampling is employed. The output signal of the digital low-pass filter 47 is given to a D/A converter 48. The D/A converter 48 converts the high level and the low level of a pulse signal into direct current voltages with adequate values, respectively. The output signal of the D/A converter 48 is supplied to an analog low-pass filter 49. A wobbling signal is generated from the analog low-pass filter 49. The wobbling signal is given to the mirror driver 33 (refer to Fig. 6).

e. Disk recording/reproducing circuit

Fig. 11 shows an example of the disk recording/ reproducing circuit. The optical disk 41 of the same size as a CD is rotated as CLV by a spindle motor 55. Although various kinds of structures for an optical head are known, an optical head in which both a focus adjustment unit and a tracking control unit are incorporated, is employed in this example.

The optical head is composed of a semiconductor laser 56, a collimating lens 57, a beam splitter 58, a 1/4 wave plate 59, an object lens 60, an actuator 61 consisting of a coil and a magnet for moving the object lens 60, and an optical sensor 63 is exposed to a laser beam from the beam splitter 58 through a cylindrical lens 62. A drive signal is supplied to the semiconductor laser 56 through a recording/reproduction switching switch 64.

Recording data from a terminal 65 is supplied to a recording circuit 66. A recording signal from the recording circuit 66 is fed to the semiconductor laser 56 via a terminal r on the recording side of the recording/ reproduction switching switch 64. A circuit for adding a redundancy code of an error correction code, an EFM modulation circuit, a recording timing controller, etc. are provided at the recording circuit 66. At the time of reproduction of the optical disk 41, a predetermined direct current 67 is given to the semiconductor laser 56 through a terminal p on the reproduction side of the recording/reproduction switching switch 64.

A returning beam from the optical disk 41 is irradiated into the optical sensor 63 through the beam splitter 58 and the cylindrical lens 62. The optical sensor 63 has a four division detector construction. Assuming that the output signals of each sensor of the optical sensor 63 are A, B, C and D, a main reproduction signal represented by [(A + B) + (C + D)] is developed by an adder 68, and a focus error signal represented by [(A + B) - (C + D)] is developed by a subtractor 69. The focus error signal is supplied to a focus servo circuit 70, and a control signal for focus servo is given to the actuator 61.

The main reproduction signal from the adder 68 is fed to a waveform-shaping circuit 71 and a band-pass filter 72. In the waveform-shaping circuit 71, the reproduction signal is converted into a pulse signal, and the pulse signal is given to an EMF demodulation circuit 73. A reproduction signal from the EMF demodulation circuit 73 is supplied to a data processing circuit 74. Reproduction data from the data processing circuit 74 is given to an optical disk control circuit provided between an optical disk drive unit and a computer.

The band-pass filter 72 has a pass band of (22.05 kHz ± 900 Hz to separate a component of a reproduction signal corresponding to the pregroove. The output signal of the band-pass filter 72 is supplied to a coherent detector 75 and a wave-shaping circuit 79. A sinewave signal of 22.05 kHz is given from a terminal 76 to the coherent detector 75. The output signal of the coherent detector 75 is fed to a low pass-filter 77. A tracking error signal is taken out of the low-pass filter 77. The tracking error signal is supplied to a tracking servo circuit 78, and a tracking control signal is given to the actuator 61 from the tracking servo circuit 78.

A pulse sequence modulated with the absolute time code of the CD format is obtained by a waveform-shaping circuit 79. The pulse sequence is supplied to a demodulation circuit 80. In the demodulation circuit 80, the pulse sequence is demodulated into data bits of the absolute time code. The absolute time code given from the demodulation circuit 80 is supplied to a system controller (not shown) of the optical disk drive unit and used for control etc. of a CLV servo of the spindle motor 55 and a scanning position of the optical head at the time of the seek operation.

f. Modification

The invention is not limited to the case of the recording through the modulation of the time code of the CD format but can through modulation of a time code be applied to recording systems with other SMPTE standards and to digital data other than a CD time code.

In addition, in the invention, information such as the time code can be superimposed on a signal other than the signal of a pregroove of the optical disk.

The present invention allows the superimposition of other information such as the time code on a deflection control signal for developing a wobbling track for detection of a tracking error. As a result, the time code, etc. can be recorded without increasing the redundancy of a data track.

## Claims

1. Recording apparatus for recording a substantially spiral track in the form of a guide groove (40) on a disk-shape recording medium (41), comprising:
   - a laser beam source (56);
   - optical means (57-60) for guiding a laser beam from said laser beam source (56) to said disk-shape recording medium (41), said optical means including deflection means (61) for deflecting the laser beam in a radial direction of said disk-shape recording medium (41);
   - control signal generating means (62-78) for generating a control signal supplied to said deflection means, said control signal being a composite signal having a first signal with a predetermined frequency and a second signal with a frequency lower than said predetermined frequency and superimposed on said first signal, **characterized in that**
   - means (55) for driving the disk-shape recording medium with a substantially constant linear velocity (CLV) are provided, and in that
   - said second signal is an absolute time code signal having minutes information, seconds information and frames information in the form of a binary coded decimal number.

2. A recording apparatus as claimed in Claim 1, wherein said control signal generating means includes an absolute time code signal source for generating said absolute time code signal, a clock signal source for generating a clock signal with a frequency as twice as said predetermined frequency, code modulating means for code-modulating said clock signal by said absolute time code signal, and filter means supplied with an output of said code modulating means and for passing a frequency component including said predetermined frequency.

## Revendications

1. Appareil d'enregistrement d'une piste sensiblement spiralée sous forme d'une gorge de guidage (40) sur un support d'enregistrement (41) en forme de disque, comprenant :
   - une source (56) d'un faisceau laser,
   - un dispositif optique (57-60) destiné à guider un faisceau laser de la source (56) vers le support d'enregistrement (41), le dispositif optique comprenant un dispositif (61) destiné à dévier le faisceau laser dans la direction radiale du support d'enregistrement (41) en forme de disque, et
   - un dispositif (62-78) générateur d'un signal de commande transmis au dispositif de déviation, le signal de commande étant un signal composite ayant un premier signal à une fréquence prédéterminée et un second signal à une fréquence inférieure à la fréquence prédéterminée et superposé au premier signal,
        caractérisé en ce que :
   - un dispositif (55) de pilotage du support d'enregistrement en forme de disque avec une vitesse linéaire pratiquement constante (CLV) est présent, et en ce que :
   - le second signal est un signal de code de temps absolu ayant une information de minutes, une information de secondes et une information de trames sous forme d'un nombre décimal codé binaire.

2. Appareil d'enregistrement selon la revendication 1, dans lequel le dispositif générateur d'un signal de commande comprend une source d'un signal de code de temps absolu destinée à créer le signal de code de temps absolu, une source de signaux d'horloge destinée à créer un signal d'horloge ayant une fréquence égale au double de la fréquence prédéterminée, un dispositif de modulation de code destiné à moduler le signal d'horloge par le signal de code de temps absolu, et un dispositif de filtrage qui reçoit un signal de sortie du dispositif de modulation par le code et qui est destiné à transmettre une composante en fréquence qui comprend la fréquence prédéterminée.

**Patentansprüche**

1. Aufzeichnungsgerät zum Aufzeichnen einer im wesentlichen spiralförmigen Spur in Form einer Führungsnut (40) auf einem plattenförmigen Aufzeichnungsmedium (41), mit
   - einer Laserstrahlquelle (56);
   - einer optischen Einrichtung (57 - 60) zum Leiten des Laserstrahls von der Laserstrahlquelle (56) zum plattenförmigen Aufzeichnungsmedium (41), welche optische Einrichtung über eine Ablenkeinrichtung (61) zum Ablenken des Laserstrahls in radialer Richtung des plattenförmigen Aufzeichnungsmediums (41) verfügt;
   - einer Steuersignalerzeugungseinrichtung (62 - 78) zum Erzeugen eines Steuersignals, das der Ablenkeinrichtung zugeführt wird, welches Steuersignal ein zusammengesetztes Signal ist, das ein erstes Signal mit vorgegebener Frequenz und ein zweites Signal mit einer Frequenz aufweist, die geringer ist als die vorgegebene Frequenz, und das dem ersten Signal überlagert ist;
   - **dadurch gekennzeichnet,** daß
   - eine Einrichtung (55) zum Antreiben des plattenförmigen Aufzeichnungsmediums mit im wesentlichen konstanter linearer Geschwindigkeit (CLV = Constant Linear Velocity) vorhanden ist, und daß
   - das zweite Signal ein Kodiersignal für die absolute Zeit ist, mit Minuteninformation, Sekundeninformation und Rahmeninformation in Form einer binär kodierten Dezimalzahl.

2. Aufzeichnungsgerät nach Anspruch 1, bei dem die Steuersignalerzeugungseinrichtung eine Kodiersignalquelle für die absolute Zeit aufweist, um das Kodiersignal für die absolute Zeit zu erzeugen, eine Taktsignalquelle zum Erzeugen eines Taktsignals mit einer Frequenz, die das Doppelte der vorgegebenen Frequenz ist, eine Kodemoduliereinrichtung zur Kodemodulation des Taktsignals durch das Kodesignal für die absolute Zeit, und eine Filtereinrichtung aufweist, der das Ausgangssignal der Kodemoduliereinrichtung zugeführt wird und die dazu dient, eine Frequenzkomponente einschließlich der vorgegebenen Frequenz

durchzulassen.

# Fig. 1

# Fig. 2

# Fig.5A

# Fig.5B

PREAMBLE

Fig.3A
Fig.3B
Fig.3C
Fig.3D
Fig.3E
Fig.3F
Fig.3G
Fig.3H
Fig.3I
Fig.3J
Fig.3K

588 T

T

12 T

36 T

24T

24T

"1"

"O"

"1"

"1"

EP 0 265 695 B1

Fig. 4A

| PREAMBLE | DATA |

12 SAMPLES

(24×24=576) SAMPLES

588 SAMPLES

Fig. 4B

"0"

"1"

PREAMBLE

12 SAMPLES

24 SAMPLES

Fig. 9

A 1

B 2

45 MODULATION CIRCUIT → 46 HPF → 47 LPF → 48 D/A → 49 ANALOG LPF → TO MIRROR DRIVER

# Fig. 6

# Fig. 10

Fig. 12A

Fig. 12B

# Fig. 7

① 26
25

② 26
25

③ 26 35
25

④ 26 35 36
25

⑤ 36

⑥ 40 39
41 37 38

# Fig. 8

41

40

# Fig. 11

EP 0 265 695 B1